# EUROPEAN PATENT APPLICATION

(11) **EP 3 896 772 A1**
(43) Date of publication of application: **20.10.2021**
(21) Application number: 19896809.1
(22) Date of filing: 29.11.2019
(51) Int. Cl.: H01M 10/0567, H01M 4/58, H01M 10/052, H01M 10/058

(54) **NON-AQUEOUS ELECTROLYTE FOR BATTERY AND LITHIUM SECONDARY BATTERY**

(30) Priority: 13.12.2018 JP 2018233324
(71) Applicant: Mitsui Chemicals, Inc., Minato-ku Tokyo 105-7122 (JP)
(72) Inventor: FUJIYAMA, Satoko, Tokyo 104-0031 (JP); SUGAWARA, Kei, Sodegaura-shi, Chiba 299-0265 (JP)
(74) Representative: J A Kemp LLP
(86) International application number: PCT/JP2019/046829
(87) International publication number: WO 2020/121850

(57) **Abstract**

A non-aqueous electrolyte solution for a battery, wherein the non-aqueous electrolyte solution is used for a lithium secondary battery comprising lithium iron phosphate as a positive electrode active material, and the non-aqueous electrolyte solution comprises a compound represented by the following Formula (1). In Formula (1), R¹¹ and R¹² each independently represent an aliphatic group having from 1 to 12 carbon atoms or a fluorinated aliphatic group having from 1 to 12 carbon atoms.

R¹¹-N=C=N-R¹² (1)

## Description

### Technical Field

The present disclosure relates to a non-aqueous electrolyte solution for a battery and a lithium secondary battery.

### Background Art

Conventionally, various studies have been conducted on non-aqueous electrolyte solutions for batteries such as lithium secondary batteries.

For example, the Patent Document 1 below discloses a non-aqueous electrolyte solution for a battery, characterized in that, for the purpose of preventing battery degradation by preventing, in non-aqueous electrolyte solution batteries, generation of halogen acid caused by water contamination, to a non-aqueous electrolyte solution containing a supporting electrolyte which can react with water to produce a halogen acid, a complex-forming compound which does not produce a halogen acid by interacting with the water and supporting electrolyte to form an inert complex has been added.

Patent Document 2 below discloses a non-aqueous electrolyte solution containing a compound with a carbodiimide structure as a non-aqueous electrolyte solution that can provide a non-aqueous gel-like composition in a non-aqueous electrolyte solution that generates free acid, and further discloses an electrochemical device (for example, a battery) using this non-aqueous electrolyte solution.

As a non-aqueous electrolyte in which coloration and acid content increase during storage are suppressed, a non-aqueous electrolyte containing a carbodiimide with a specific structure and at least one of a sulfate ester and a boron compound with a specific structure, as described in Patent Document 3 below, is known. Patent Document 3 further discloses a non-aqueous electrolyte secondary battery made using the above-described non-aqueous electrolyte, which has less gas generation during initial charging and favorable cycle characteristics.

Patent Document 1: Japanese Patent Application Laid-Open (JP-A) No. H10-294129
Patent Document 2: JP-A No. 2001-313073
Patent Document 3: JP-A No. 2010-251313

### SUMMARY OF INVENTION

### Technical Problem

Meanwhile, lithium secondary batteries (hereinafter, also simply referred to as "batteries") containing lithium iron phosphate as a positive electrode active material are widely used.

However, it was found that the battery characteristics (specifically, battery capacity and resistance) of the above-described battery after storage may decrease. One of the reasons for this is thought to be that iron elutes from the lithium iron phosphate as a positive electrode active material and precipitates on the negative electrode during storage of the battery.

Therefore, it may be required to improve the battery characteristics of the above-described battery after storage.

An object of one aspect of the present disclosure is to provide a non-aqueous electrolyte solution for a battery capable of improving battery characteristics after storage in a lithium secondary battery including lithium iron phosphate as a positive electrode active material.

An object of another aspect of the disclosure is to provide a lithium secondary battery that includes lithium iron phosphate as a positive electrode active material and in which the battery characteristics after storage are improved.

### Solution to Problem

Means for solving the above-described problems include the following aspects.
<1> A non-aqueous electrolyte solution for a battery, wherein:
   the non-aqueous electrolyte solution is used for a lithium secondary battery comprising lithium iron phosphate as a positive electrode active material, and
   the non-aqueous electrolyte solution comprises a compound represented by the following Formula (1):

      R¹¹-N=C=N-R¹² (1)
   wherein, in Formula (1), R¹¹ and R¹² each independently represent an aliphatic group having from 1 to 12 carbon atoms or a fluorinated aliphatic group having from 1 to 12 carbon atoms.
<2> The non-aqueous electrolyte solution for a battery according to <1>, wherein the compound represented by Formula (1) comprises a compound in which R¹¹ and R¹² in Formula (1) are each independently an aliphatic group having from 3 to 8 carbon atoms.
<3> The non-aqueous electrolyte solution for a battery according to <1> or <2>, further comprising at least one selected from the group consisting of compounds represented by any of the following Formulas (2) to (9): 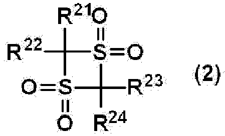 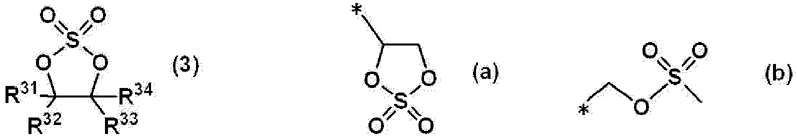 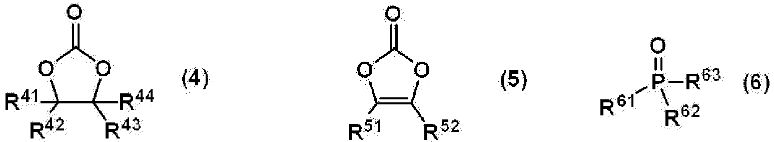 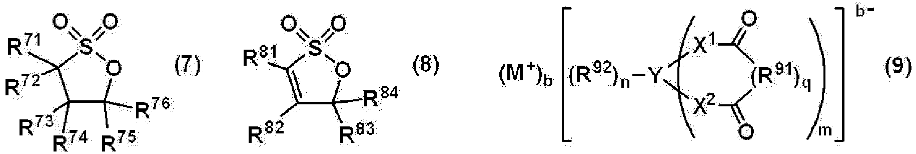 wherein, in Formula (2), R²¹ to R²⁴ each independently represent a hydrogen atom, a fluorine atom, a hydrocarbon group having from 1 to 6 carbon atoms, or a fluorinated hydrocarbon group having from 1 to 6 carbon atoms,
   wherein, in Formula (3), R³¹ to R³⁴ each independently represent a hydrogen atom, a hydrocarbon group having from 1 to 6 carbon atoms, a group represented by Formula (a), or a group represented by Formula (b), and, in Formula (a) and Formula (b), * represents a bonding position,
   wherein, in Formula (4), R⁴¹ to R⁴⁴ each independently represent a hydrogen atom, a fluorine atom, a hydrocarbon group having from 1 to 6 carbons, or a fluorinated hydrocarbon group having from 1 to 6 carbons, and R⁴¹ to R⁴⁴ are not simultaneously hydrogen atoms,
   wherein, in Formula (5), R⁵¹ and R⁵² each independently represent a hydrogen atom, a fluorine atom, a hydrocarbon group having from 1 to 6 carbon atoms, or a fluorinated hydrocarbon group having from 1 to 6 carbon atoms,
   wherein, in Formula (6), R⁶¹ to R⁶³ each independently represent a fluorine atom or an -OLi group, and at least one of R⁶¹ to R⁶³ is an -OLi group.
   wherein, in Formula (7), R⁷¹ to R⁷⁶ each independently represent a hydrogen atom, a fluorine atom, a hydrocarbon group having from 1 to 3 carbon atoms, or a fluorinated hydrocarbon group having from 1 to 3 carbon atoms,
   wherein, in Formula (8), R⁸¹ to R⁸⁴ independently represent a hydrogen atom, a fluorine atom, a hydrocarbon group having from 1 to 3 carbon atoms, or a fluorinated hydrocarbon group having from 1 to 3 carbon atoms, and
   wherein, in Formula (9), M represents an alkali metal; Y represents a transition element or a group 13, 14, or 15 element of the periodic table; b is an integer from 1 to 3; m is an integer from 1 to 4; n is an integer from 0 to 8; q is 0 or 1; R⁹¹ represents an alkylene group having from 1 to 10 carbon atoms, a halogenated alkylene group having from 1 to 10 carbon atoms, an arylene group having from 6 to 20 carbon atoms, or a halogenated arylene group having from 6 to 20 carbon atoms, wherein these groups may contain a substituent or a heteroatom in a structure thereof, and, when q is 1, and m is from 2 to 4, the m R⁹¹s may be bonded; R⁹² represents a halogen atom, an alkyl group having from 1 to 10 carbon atoms, a halogenated alkyl group having from 1 to 10 carbon atoms, an aryl group having from 6 to 20 carbon atoms, a halogenated aryl group having from 6 to 20 carbon atoms, wherein these groups may contain a substituent or a heteroatom in a structure thereof, and, when n is from 2 to 8, the n R⁹²s may be optionally bonded to form a ring, or R⁹² represents -X³R⁹³; X¹, X², and X³ each independently represent O, S, or NR⁹⁴; and R⁹³ and R⁹⁴ each independently represent a hydrogen atom, an alkyl group having from 1 to 10 carbon atoms, a halogenated alkyl group having from 1 to 10 carbon atoms, an aryl group having from 6 to 20 carbon atoms, or a halogenated aryl group having from 6 to 20 carbon atoms, wherein these groups may contain a substituent or a heteroatom in a structure thereof, and, when there are a plurality of R⁹³s or R⁹⁴s, the plurality of R⁹³s or R⁹⁴s may be bonded to form a ring.
<4> The non-aqueous electrolyte solution for a battery according to <3>, comprising a compound represented by Formula (3).
<5> The non-aqueous electrolyte solution for a battery according to <3> or <4>, comprising a compound represented by Formula (3) and a compound represented by Formula (5).
<6> The non-aqueous electrolyte solution for a battery according to <5>, wherein a mass content of the compound represented by Formula (5) is greater than a mass content of the compound represented by Formula (1) and is greater than a mass content of the compound represented by Formula (3).
<7> The non-aqueous electrolyte solution for a battery according to any one of <1> to <6>, wherein a content of the compound represented by Formula (1) is from 0.01 mass% to 5 mass% with respect to a total amount of the non-aqueous electrolyte solution.
<8> A lithium secondary battery comprising:
   a positive electrode comprising lithium iron phosphate as a positive electrode active material;
   a negative electrode; and
   the non-aqueous electrolyte solution for a battery according to any one of <1> to <7>.
<9> A lithium secondary battery obtained by charging and discharging the lithium secondary battery according to <8>.

### Advantageous Effects of Invention

According to one aspect of the disclosure, a non-aqueous electrolyte solution for a battery in which the battery characteristics after storage in a lithium secondary battery including lithium iron phosphate as a positive electrode active material can be improved is provided.

According to another aspect of the disclosure, a lithium secondary battery which includes lithium iron phosphate as a positive electrode active material, and in which the battery characteristics after storage are improved, is provided.

### BRIEF DESCRIPTION OF DRAWINGS

Fig. 1 is a schematic perspective diagram illustrating one example of a laminated battery, which is one example of the lithium secondary battery of the disclosure.
Fig. 2 is a schematic sectional diagram in the thickness direction of a layered electrode body housed in the laminated battery illustrated in Fig. 1.
Fig. 3 is a schematic sectional diagram illustrating one example of a coin battery, which is another example of the lithium secondary battery of the disclosure.

### DESCRIPTION OF EMBODIMENTS

Herein, the numerical range expressed by using "from A to B" means a range including numerical values A and B as a lower limit value and an upper limit value.

Herein, the amount of each component in a composition means the total amount of the plurality of substances present in the composition, unless otherwise specified, when there is more than one substance corresponding to each component in the composition.

### [Non-aqueous Electrolyte Solution for Battery]

The non-aqueous electrolyte solution for a battery of the disclosure (hereinafter, also simply referred to as a "non-aqueous electrolyte solution") is a non-aqueous electrolyte solution used for a lithium secondary battery containing lithium iron phosphate as a positive electrode active material (for example, the lithium secondary battery of the disclosure described below), and contains a compound represented by the following Formula (1).

The non-aqueous electrolyte solution of the disclosure can improve battery characteristics after storage in a lithium secondary battery containing lithium iron phosphate as a positive electrode active material.

The reason why such an effect is achieved is not clear, but is assumed to be as follows.

One of the reasons for deterioration of battery characteristics after storage in the above-described lithium secondary battery is thought to be that iron elutes from lithium iron phosphate as the positive electrode active material during battery storage and precipitates on the negative electrode.

When using the non-aqueous electrolyte solution of the disclosure, it is thought that leaching of iron from lithium iron phosphate during storage of the battery can be suppressed by action of the compound represented by Formula (1) contained in the non-aqueous electrolyte solution. This is thought to improve the battery characteristics after storage.

### < Compound Represented by Formula (1) >

The non-aqueous electrolyte solution of the disclosure contains at least one compound represented by Formula (1).

R¹¹-N=C=N-R¹² (1)

In Formula (1), R¹¹ and R¹² each independently represent an aliphatic group having from 1 to 12 carbon atoms or a fluorinated aliphatic group having from 1 to 12 carbon atoms.

In Formula (1), the fluorinated aliphatic group means an aliphatic group which is substituted with at least one fluorine atom.

In Formula (1), the aliphatic group and the fluorinated aliphatic group may each contain a branched structure and/or a ring structure.

In Formula (1), the aliphatic group is preferably an alkyl group or an alkenyl group, and more preferably an alkyl group.

In Formula (1), the fluorinated aliphatic group is preferably a fluorinated alkyl group or a fluorinated alkenyl group, and more preferably a fluorinated alkyl group.

In Formula (1), the number of carbon atoms in the aliphatic group having from 1 to 12 carbon atoms is preferably from 2 to 10, and more preferably from 3 to 8.

In Formula (1), the number of carbon atoms in the fluorinated aliphatic group having from 1 to 12 carbon atoms is preferably from 2 to 10, and more preferably from 3 to 8.

Examples of preferred aspects of the non-aqueous electrolyte solution of the disclosure include an aspect in which the compound represented by Formula (1) contained in the non-aqueous electrolyte solution of the disclosure includes "a compound in which R¹¹ and R¹² in Formula (1) are each independently an aliphatic group having from 3 to 8 carbon atoms".

In Formula (1), R¹¹ and R¹² are each independently
preferably an alkyl group having from 1 to 12 carbon atoms or a fluorinated alkyl group having from 1 to 12 carbon atoms,
more preferably an alkyl group having from 1 to 12 carbon atoms,
still more preferably a normal propyl group, an isopropyl group, a cyclohexyl group, a methylcyclohexyl group, or a dimethylcyclohexyl group, and
still more preferably an isopropyl group or a cyclohexyl group.

For the compound represented by Formula (1),
*N,N'*-diisopropylcarbodiimide (a compound in which both R¹¹ and R¹² are isopropyl groups; hereinafter, also referred to as "DIC") or
*N,N'*-dicyclohexylcarbodiimide (a compound in which both R¹¹ and R¹² are cyclohexyl groups; hereinafter, also referred to as "DCC")
is particularly preferable.

The content of the compound represented by Formula (1) with respect to the total amount of the non-aqueous electrolyte solution is preferably from 0.01 mass% to 5 mass%, more preferably from 0.05 mass% to 3 mass%, still more preferably from 0.1 mass% to 2 mass%, and still more preferably from 0.1 mass% to 1 mass%.

From the viewpoint of more effectively improving the battery characteristics after storage, the non-aqueous electrolyte solution of the disclosure may further contain at least one selected from the group consisting of the compounds represented by Formula (2) to Formula (9) below.

The compounds represented by Formula (2) to Formula (9) will be described below.

### < Compound Represented by Formula (2) >

The non-aqueous electrolyte solution of the disclosure may contain at least one compound represented by Formula (2).

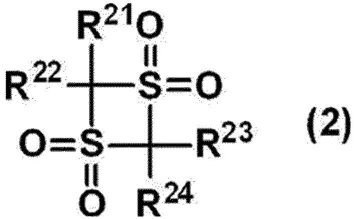

In Formula (2), R²¹ to R²⁴ each independently represent a hydrogen atom, a fluorine atom, a hydrocarbon group having from 1 to 6 carbon atoms, or a fluorinated hydrocarbon group having from 1 to 6 carbon atoms.

In Formula (2), the hydrocarbon group having from 1 to 6 carbon atoms represented by R²¹ to R²⁴ may be a straight chain hydrocarbon group or a hydrocarbon group having a branched structure and/or a ring structure.

For the hydrocarbon group having from 1 to 6 carbon atoms represented by R²¹ to R²⁴, an alkyl group or an aryl group is preferable, and an alkyl group is still more preferable.

In Formula (2), the number of carbon atoms of the hydrocarbon group having from 1 to 6 carbon atoms represented by R²¹ to R²⁴ is preferably from 1 to 3, more preferably 1 or 2, and particularly preferably 1.

In Formula (2), the fluorinated hydrocarbon group having from 1 to 6 carbon atoms represented by R²¹ to R²⁴ may be a straight chain fluorinated hydrocarbon group or a fluorinated hydrocarbon group having a branched structure and/or a ring structure.

The fluorinated hydrocarbon group having from 1 to 6 carbon atoms represented by R²¹ to R²⁴ is preferably a fluorinated alkyl group or a fluorinated aryl group, and more preferably a fluorinated alkyl group.

In Formula (2), the number of carbon atoms of the fluorinated hydrocarbon group having from 1 to 6 carbon atoms represented by R²¹ to R²⁴ is preferably from 1 to 3, more preferably 1 or 2, and particularly preferably 1.

Specific examples of compounds represented by Formula (2) include compounds represented by Formula (2-1) to Formula (2-9) below (hereinafter, also referred to as Compound (2-1) to Compound (2-9), respectively), but compounds represented by Formula (2) are not limited to these specific examples.

Among these, Compound (2-1) or Compound (2-2) is particularly preferable.

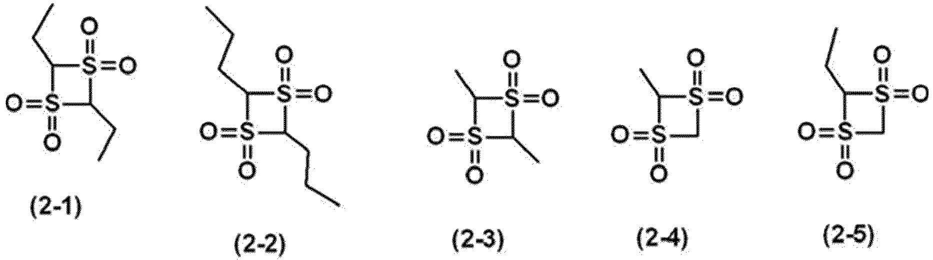

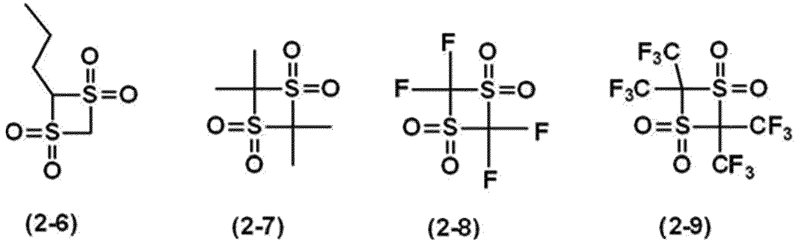

When the non-aqueous electrolyte solution of the disclosure contains a compound represented by Formula (2), the content of the compound represented by Formula (2) with respect to the total amount of the non-aqueous electrolyte solution is preferably from 0.001 mass% to 10 mass%, more preferably from 0.005 mass% to 5 mass%, still more preferably from 0.01 mass% to 2 mass%, and particularly preferably from 0.1 mass% to 1 mass%.

### < Compound Represented by Formula (3) >

The non-aqueous electrolyte solution of the disclosure may contain at least one compound represented by Formula (3).

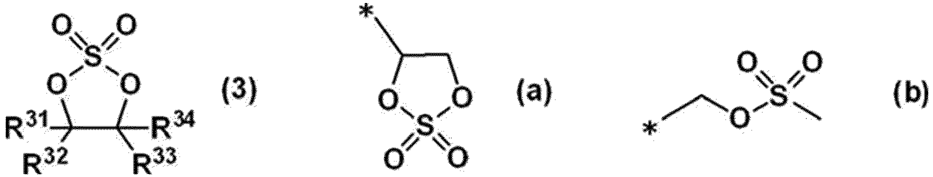

In Formula (3), R³¹ to R³⁴ each independently represent a hydrogen atom, a hydrocarbon group having from 1 to 6 carbon atoms, a group represented by Formula (a), or a group represented by Formula (b). In Formula (a) and Formula (b), * represents a bonding position.

Preferable aspects of the hydrocarbon group having from 1 to 6 carbon atoms represented by R³¹ to R³⁴ in Formula (3) are the same as the preferable aspects of the hydrocarbon group having from 1 to 6 carbon atoms represented by R²¹ to R²⁴ in Formula (2).

The number of carbon atoms of the hydrocarbon group having from 1 to 6 carbon atoms represented by R³¹ to R³⁴ is preferably from 1 to 3, more preferably 1 or 2, and particularly preferably 1.

A preferable aspect of Formula (3) is an aspect in which:
R³¹ is a hydrocarbon group having from 1 to 6 carbon atoms, a group represented by Formula (a), or a group represented by Formula (b);
R³² is a hydrogen atom;
R³³ is a hydrogen atom, a hydrocarbon group having from 1 to 6 carbon atoms, a group represented by Formula (a), or a group represented by Formula (b); and
R³⁴ is a hydrogen atom.

Specific examples of the compound represented by Formula (3) include compounds represented by Formula (3-1) to Formula (3-4) (hereinafter, also referred to as Compounds (3-1) to (3-4), respectively), but the compound represented by Formula (3) are not limited to these specific examples.

Among these, Compounds (3-1) to (3-3) are preferable.

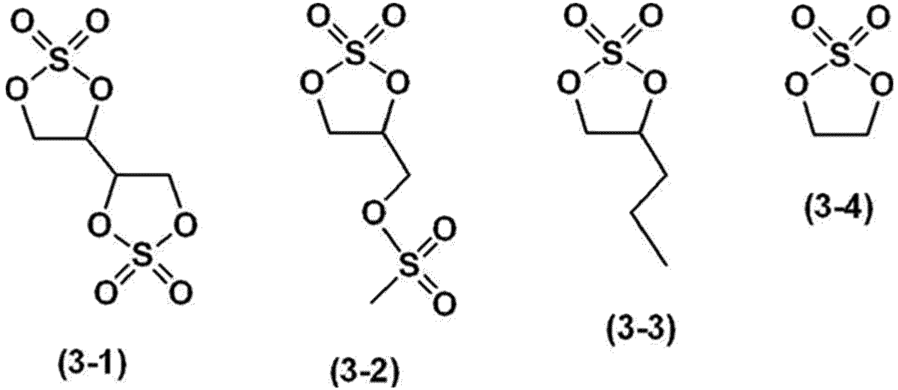

When the non-aqueous electrolyte solution of the disclosure contains a compound represented by Formula (3), the content of the compound represented by Formula (3) with respect to the total amount of the non-aqueous electrolyte solution is preferably from 0.001 mass% to 10 mass%, more preferably from 0.005 mass% to 5 mass%, still more preferably from 0.01 mass% to 2 mass%, and still more preferably from 0.1 mass% to 1 mass%.

When the non-aqueous electrolyte solution of the disclosure contains a compound represented by Formula (3),
the ratio of the mass content of the compound represented by Formula (3) to the mass content of the compound represented by Formula (1) (hereinafter, also referred to as "mass content ratio [compound represented by Formula (3)/compound represented by Formula (1)]") is preferably from 0.1 to 10, more preferably from 0.2 to 5, and still more preferably from 0.3 to 3.

### < Compound Represented by Formula (4) >

The non-aqueous electrolyte solution of the disclosure may contain at least one compound represented by the following Formula (4).

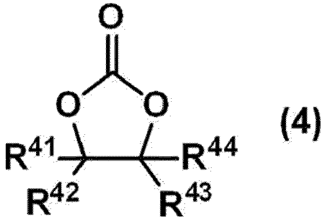

In Formula (4), R⁴¹ to R⁴⁴ each independently represent a hydrogen atom, a fluorine atom, a hydrocarbon group having from 1 to 6 carbon atoms, or a fluorinated hydrocarbon group having from 1 to 6 carbon atoms. However, R⁴¹ to R⁴⁴ are not simultaneously hydrogen atoms.

In Formula (4), a preferable aspect of the hydrocarbon group having from 1 to 6 carbon atoms represented by R⁴¹ to R⁴⁴ is the same as a hydrocarbon group having from 1 to 6 carbon atoms represented by R²¹ to R²⁴ in Formula (2).

However, the hydrocarbon group having from 1 to 6 carbon atoms represented by R⁴¹ to R⁴⁴ is also preferably an alkenyl group.

The number of carbon atoms of the hydrocarbon group having from 1 to 6 carbon atoms represented by R⁴¹ to R⁴⁴ is preferably from 1 to 3, more preferably 1 or 2, and particularly preferably 1.

Preferable aspects of the fluorinated hydrocarbon group having from 1 to 6 carbon atoms represented by R⁴¹ to R⁴⁴ in Formula (4) are the same as the preferable aspects of the fluorinated hydrocarbon group having from 1 to 6 carbon atoms represented by R²¹ to R²⁴ in Formula (2).

However, the fluorinated hydrocarbon group having from 1 to 6 carbon atoms represented by R⁴¹ to R⁴⁴ is also preferably a fluorinated alkenyl group.

The number of carbon atoms of the fluorinated hydrocarbon group having from 1 to 6 carbon atoms represented by R⁴¹ to R⁴⁴ is preferably from 1 to 3, more preferably 1 or 2, and particularly preferably 1.

Specific examples of the compound represented by Formula (4) include compounds represented by Formula (4-1) to Formula (4-5) (hereinafter, also referred to as Compounds (4-1) to (4-5), respectively), but the compound represented by Formula (4) are not limited to these specific examples.

Among these, Compound (4-1) or Compound (4-2) is particularly preferable.

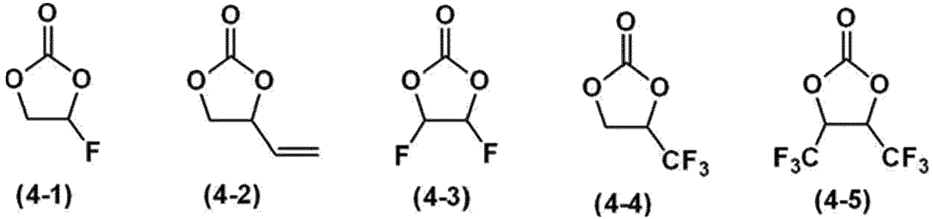

When the non-aqueous electrolyte solution of the disclosure contains a compound represented by Formula (4), the content of the compound represented by Formula (4) with respect to the total amount of the non-aqueous electrolyte solution is preferably from 0.001 mass% to 10 mass%, more preferably from 0.005 mass% to 5 mass%, still more preferably from 0.01 mass% to 2 mass%, and particularly preferably from 0.1 mass% to 1 mass%.

### < Compound Represented by Formula (5) >

The non-aqueous electrolyte solution of the disclosure may contain at least one compound represented by the following Formula (5).

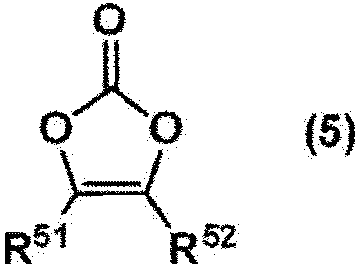

In Formula (5), R⁵¹ and R⁵² each independently represent a hydrogen atom, a fluorine atom, a hydrocarbon group having from 1 to 6 carbon atoms, or a fluorinated hydrocarbon group having from 1 to 6 carbon atoms.

In Formula (5), a preferable aspect of the hydrocarbon group having from 1 to 6 carbon atoms represented by R⁵¹ or R⁵² is the same as the preferable aspect of a hydrocarbon group having from 1 to 6 carbon atoms represented by R²¹ to R²⁴ in Formula (2).

The number of carbon atoms of the hydrocarbon group having from 1 to 6 carbon atoms represented by R⁵¹ or R⁵² is preferably from 1 to 3, more preferably 1 or 2, and particularly preferably 1.

Preferable aspects of the fluorinated hydrocarbon group having from 1 to 6 carbon atoms represented by R⁵¹ or R⁵² in Formula (5) are the same as the preferable aspects of the fluorinated hydrocarbon group having from 1 to 6 carbon atoms represented by R²¹ to R²⁴ in Formula (2).

The number of carbon atoms of the fluorinated hydrocarbon group having from 1 to 6 carbon atoms represented by R⁵¹ or R⁵² is preferably from 1 to 3, more preferably 1 or 2, and particularly preferably 1.

Specific examples of the compound represented by Formula (5) include compounds represented by Formula (5-1) to Formula (5-11) (hereinafter, also referred to as Compounds (5-1) to (5-11), respectively), but the compound represented by Formula (5) are not limited to these specific examples.

Among these, Compound (5-1) is particularly preferable.

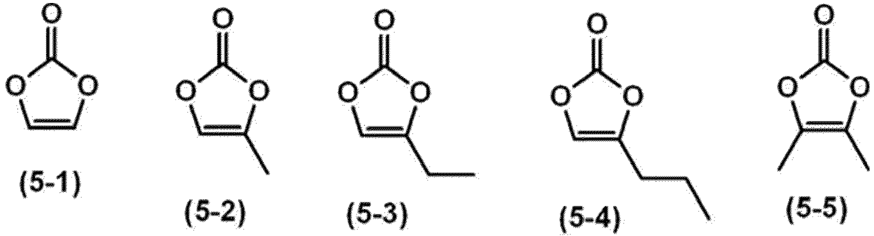

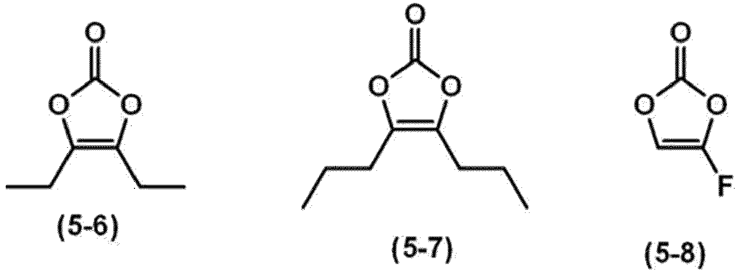

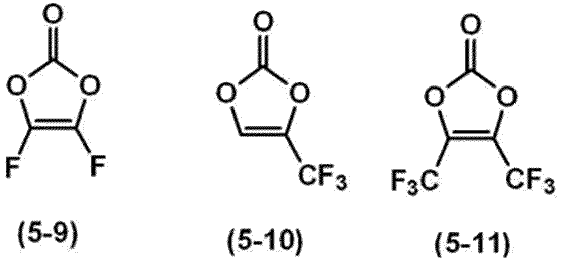

When the non-aqueous electrolyte solution of the disclosure contains a compound represented by Formula (5), the content of the compound represented by Formula (5) with respect to the total amount of the non-aqueous electrolyte solution is preferably from 0.001 mass% to 10 mass%, more preferably from 0.005 mass% to 5 mass%, still more preferably from 0.01 mass% to 5 mass%, and particularly preferably from 0.1 mass% to 3 mass%.

When the non-aqueous electrolyte solution of the disclosure contains a compound represented by Formula (5), the mass content of the compound represented by Formula (5) is preferably greater than the mass content of the compound represented by Formula (1).

The ratio of the mass of the compound represented by Formula (5) to the mass of the compound represented by Formula (1) (hereinafter, also referred to as "mass content ratio [compound represented by Formula (5)/compound represented by Formula (1)]") is preferably from 0.2 to 10, more preferably from 0.5 to 8, still more preferably from 1.1 to 8, still more preferably from 1.5 to 6, and still more preferably from 2 to 6.

### < Compound Represented by Formula (6) >

The non-aqueous electrolyte solution of the disclosure may contain at least one compound represented by the following Formula (6).

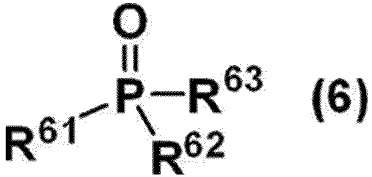

In Formula (6), R⁶¹ to R⁶³ each independently represent a fluorine atom or an -OLi group, and at least one of R⁶¹ to R⁶³ is an -OLi group.

Specific examples of compounds represented by Formula (6) include compounds represented by Formula (6-1) and Formula (6-2) below (hereinafter, also referred to as Compound (6-1) and Compound (6-2), respectively), but compounds represented by Formula (6) are not limited to these specific examples.

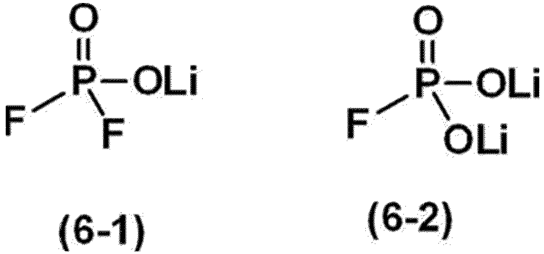

When the non-aqueous electrolyte solution of the disclosure contains a compound represented by Formula (6), the content of the compound represented by Formula (6) with respect to the total amount of the non-aqueous electrolyte solution is preferably from 0.001 mass% to 10 mass%, more preferably from 0.005 mass% to 5 mass%, still more preferably from 0.01 mass% to 2 mass%, and particularly preferably from 0.1 mass% to 1 mass%.

### < Compound Represented by Formula (7) >

The non-aqueous electrolyte solution of the disclosure may contain at least one compound represented by the following Formula (7).

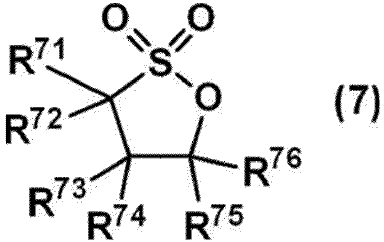

In Formula (7), R⁷¹ to R⁷⁶ each independently represent a hydrogen atom, a fluorine atom, a hydrocarbon group having from 1 to 3 carbon atoms, or a fluorinated hydrocarbon group having from 1 to 3 carbon atoms.

Preferable aspects of hydrocarbon groups having from 1 to 3 carbon atoms represented by R⁷¹ to R⁷⁶ in Formula (7) are the same as the preferable aspects of hydrocarbon groups having from 1 to 6 carbon atoms represented by R²¹ to R²⁴ in Formula (2), except that the number of carbon atoms is from 1 to 3.

The number of carbon atoms of the hydrocarbon group having from 1 to 3 carbon atoms represented by R⁷¹ to R⁷⁶ is preferably 1 or 2, and more preferably 1.

Preferable aspects of fluorinated hydrocarbon groups having from 1 to 3 carbon atoms represented by R⁷¹ to R⁷⁶ in Formula (7) are the same as the preferable aspects of fluorinated hydrocarbon groups having from 1 to 6 carbon atoms represented by R²¹ to R²⁴ in Formula (2), except that the number of carbon atoms is from 1 to 3.

The number of carbon atoms of the fluorinated hydrocarbon group having from 1 to 3 carbon atoms represented by R⁷¹ to R⁷⁶ is preferably 1 or 2, and more preferably 1.

Specific examples of compounds represented by Formula (7) include compounds represented by Formula (7-1) to Formula (7-21) below (hereinafter, also referred to as Compound (7-1) to Compound (7-21), respectively), but compounds represented by Formula (7) are not limited to these specific examples.

Among these, Compound (7-1) is particularly preferable.

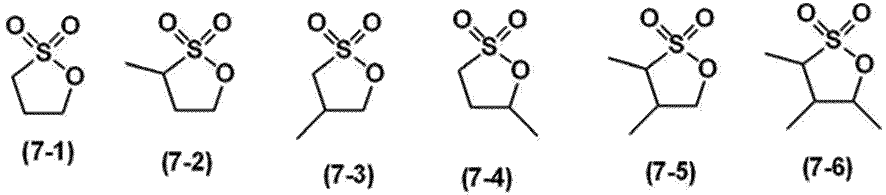

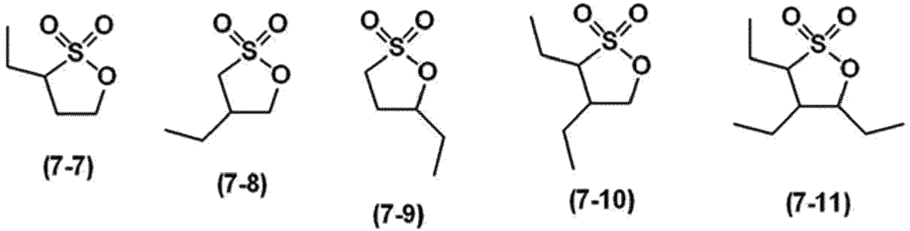

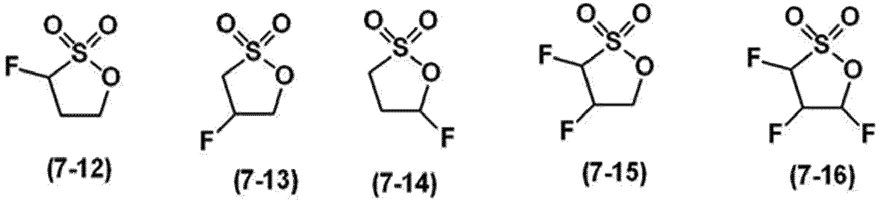

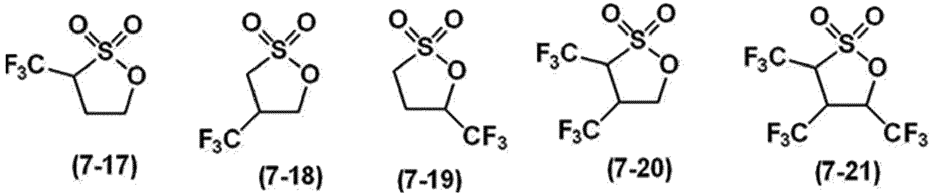

When the non-aqueous electrolyte solution of the disclosure contains a compound represented by Formula (7), the content of the compound represented by Formula (7) with respect to the total amount of the non-aqueous electrolyte solution is preferably from 0.001 mass% to 10 mass%, more preferably from 0.005 mass% to 5 mass%, still more preferably from 0.01 mass% to 2 mass%, and particularly preferably from 0.1 mass% to 1 mass%.

### < Compound Represented by Formula (8) >

The non-aqueous electrolyte solution of the disclosure may contain at least one compound represented by the following Formula (8).

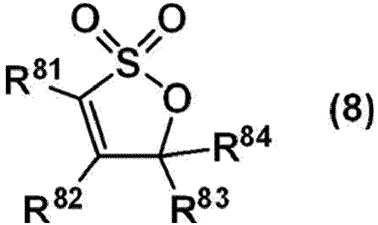

In Formula (8), R⁸¹ to R⁸⁴ each independently represent a hydrogen atom, a fluorine atom, a hydrocarbon group having from 1 to 3 carbon atoms, or a fluorinated hydrocarbon group having from 1 to 3 carbon atoms.

Preferable aspects of hydrocarbon groups having from 1 to 3 carbon atoms represented by R⁸¹ to R⁸⁴ in Formula (8) are the same as the preferable aspects of hydrocarbon groups having from 1 to 6 carbon atoms represented by R²¹ to R²⁴ in Formula (2), except that the number of carbon atoms is from 1 to 3.

The number of carbon atoms of the hydrocarbon group having from 1 to 3 carbon atoms represented by R⁸¹ to R⁸⁴ is preferably 1 or 2, and more preferably 1.

Preferable aspects of fluorinated hydrocarbon groups having from 1 to 3 carbon atoms represented by R⁸¹ to R⁸⁴ in Formula (8) are the same as the preferable aspects of fluorinated hydrocarbon groups having from 1 to 6 carbon atoms represented by R²¹ to R²⁴ in Formula (2), except that the number of carbon atoms is from 1 to 3.

The number of carbon atoms of the fluorinated hydrocarbon group having from 1 to 3 carbon atoms represented by R⁸¹ to R⁸⁴ is preferably 1 or 2, and more preferably 1.

Specific examples of compounds represented by Formula (8) include compounds represented by Formula (8-1) to Formula (8-21) below (hereinafter, also referred to as Compound (8-1) to Compound (8-21), respectively), but compounds represented by Formula (8) are not limited to these specific examples.

Among these, Compound (8-1) is particularly preferable.

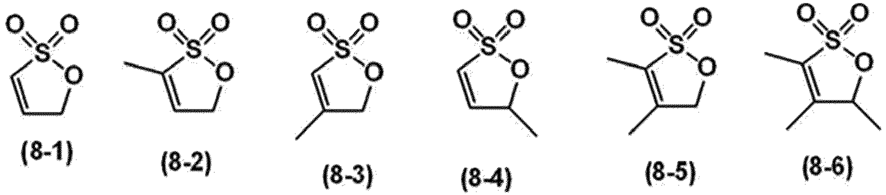

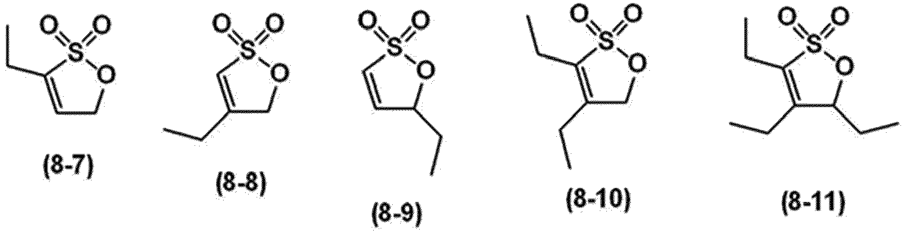

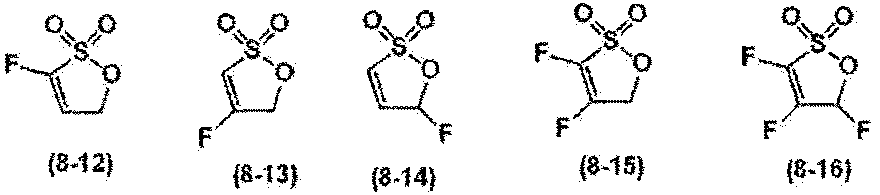

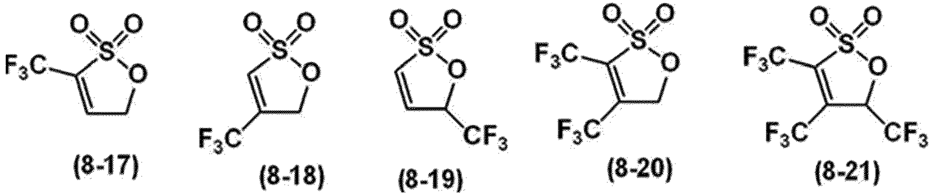

When the non-aqueous electrolyte solution of the disclosure contains a compound represented by Formula (8), the content of the compound represented by Formula (8) with respect to the total amount of the non-aqueous electrolyte solution is preferably from 0.001 mass% to 10 mass%, more preferably from 0.005 mass% to 5 mass%, still more preferably from 0.01 mass% to 2 mass%, and particularly preferably from 0.1 mass% to 1 mass%.

### < Compound Represented by Formula (9) >

The non-aqueous electrolyte solution of the disclosure may contain at least one compound represented by the following Formula (9).

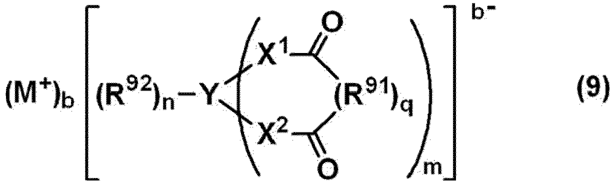

In Formula (9), M represents an alkali metal; Y represents a transition element or a group 13, 14, or 15 element of the periodic table; b is an integer from 1 to 3; m is an integer from 1 to 4; n is an integer from 0 to 8; q is 0 or 1; R⁹¹ represents an alkylene group having from 1 to 10 carbon atoms, a halogenated alkylene group having from 1 to 10 carbon atoms, an arylene group having from 6 to 20 carbon atoms, or a halogenated arylene group having from 6 to 20 carbon atoms, wherein these groups may contain a substituent or a heteroatom in a structure thereof, and, when q is 1, and m is from 2 to 4, the m R⁹¹s may be bonded; R⁹² represents a halogen atom, an alkyl group having from 1 to 10 carbon atoms, a halogenated alkyl group having from 1 to 10 carbon atoms, an aryl group having from 6 to 20 carbon atoms, a halogenated aryl group having from 6 to 20 carbon atoms, wherein these groups may contain a substituent or a heteroatom in a structure thereof, and, when n is from 2 to 8, the n R⁹²s may be optionally bonded to form a ring, or R⁹² represents -X³R⁹³; X¹, X², and X³ each independently represent O, S, or NR⁹⁴; and R⁹³ and R⁹⁴ each independently represent a hydrogen atom, an alkyl group having from 1 to 10 carbon atoms, a halogenated alkyl group having from 1 to 10 carbon atoms, an aryl group having from 6 to 20 carbon atoms, or a halogenated aryl group having from 6 to 20 carbon atoms, wherein these groups may contain a substituent or a heteroatom in a structure thereof, and, when there are a plurality of R⁹³s or R⁹⁴s, the plurality of R⁹³s or R⁹⁴s may be bonded to form a ring.

In Formula (9), M is an alkali metal, and Y is a transition metal or a group 13, 14, or 15 element of the periodic table. Among these elements, Y is preferably Al, B, V, Ti, Si, Zr, Ge, Sn, Cu, Y, Zn, Ga, Nb, Ta, Bi, P, As, Sc, Hf, or Sb, and more preferably Al, B, or P. When Y is Al, B, or P, synthesis of an anionic compound is relatively easy, and the production cost can be reduced. b, which represents the valence of the anion and the number of the cations, is an integer from 1 to 3, and is preferably 1. When b is greater than 3, a salt of the anionic compound tends to be less soluble in a mixed organic solvent, which is not desirable. The constants m and n are values related to the number of ligands, which are determined by the type of M, and m is an integer from 1 to 4 and n is an integer from 0 to 8. The constant q is 0 or 1. When q is 0, the chelating ring is a five-membered ring, and when q is 1, the chelating ring is a six-membered ring.

R⁹¹ represents an alkylene group having from 1 to 10 carbon atoms, a halogenated alkylene group having from 1 to 10 carbon atoms, an arylene group having from 6 to 20 carbon atoms, or a halogenated arylene group having from 6 to 20 carbon atoms. Such an alkylene group, a halogenated alkylene group, an arylene group, or a halogenated arylene group may contain a substituent or a heteroatom in a structure thereof. Specifically, instead of a hydrogen atom in these groups, a halogen atom, a chain or cyclic alkyl group, an aryl group, an alkenyl group, an alkoxy group, an aryloxy group, a sulfonyl group, an amino group, a cyano group, a carbonyl group, an acyl group, an amide group, or a hydroxyl group may be included as a substituent. The structure may have a nitrogen atom, a sulfur atom, or an oxygen atom introduced in place of a carbon element in these groups. When q is 1 and m is from 2 to 4, the m R⁹¹s may be bonded. Examples thereof include a ligand such as ethylenediaminetetraacetic acid.

R⁹² represents a halogen atom, an alkyl group having from 1 to 10 carbon atoms, a halogenated alkyl group having from 1 to 10 carbon atoms, an aryl group having from 6 to 20 carbon atoms, a halogenated aryl group having from 6 to 20 carbon atoms, or -X³R⁹³ (X³ and R⁹³ are described below).

An alkyl group, a halogenated alkyl group, an aryl group, or a halogenated aryl group in R⁹² may contain a substituent or a heteroatom in the structure as in R⁹¹, and when n is from 2 to 8, each of the n R¹²s may be bonded to form a ring. R⁹² is preferably an electron-withdrawing group, and particularly preferably a fluorine atom.

X¹, X², and X³ each independently represent O, S, or NR⁹⁴. This means that a ligand will be bonded to Y via one of these heteroatoms.

R⁹³ and R⁹⁴ each independently represent a hydrogen atom, an alkyl group having from 1 to 10 carbon atoms, a halogenated alkyl group having from 1 to 10 carbon atoms, an aryl group having from 6 to 20 carbon atoms, or a halogenated aryl group having from 6 to 20 carbon atoms. Such an alkyl group, a halogenated alkyl group, an aryl group, or a halogenated aryl group may contain a substituent or a heteroatom in the structure as in R⁹¹. When there are a plurality of R⁹³s and R⁹⁴s, each of the plurality of R⁹³s and R⁹⁴s may be bonded to form a ring.

Examples of alkali metals represented by M include lithium, sodium, and potassium. Among them, lithium is particularly preferable.

n is preferably an integer from 0 to 4.

The compound represented by Formula (9) is more preferably at least one selected from the group consisting of the compound represented by the following Formula (9A), the compound represented by the following Formula (9B), the compound represented by the following Formula (9C), the compound represented by the following Formula (9D), and the compound represented by the following Formula (9E).

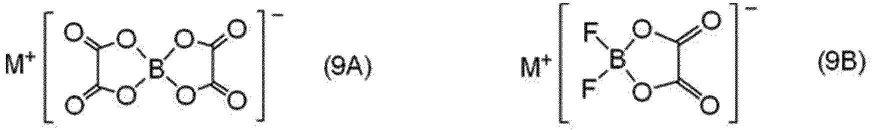

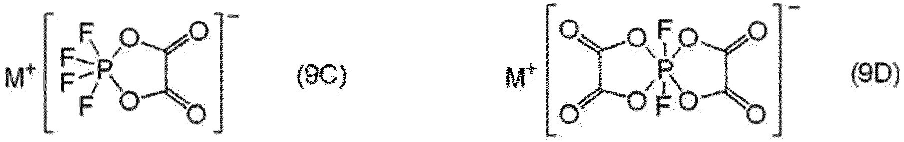

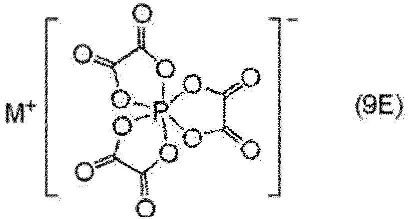

In Formula (9A) to Formula (9E), M is synonymous with M in Formula (9), and a preferable aspect thereof is also the same.

A compound represented by Formula (9) is particularly preferably a compound represented by Formula (9A), where M is lithium, or a compound represented by Formula (9D), where M is lithium.

When the non-aqueous electrolyte solution of the disclosure contains the compound represented by Formula (9), the content of the compound represented by Formula (9) in the total amount of the non-aqueous electrolyte solution is preferably from 0.001 mass% to 10 mass%, more preferably from 0.005 mass% to 5 mass%, still more preferably from 0.01 mass% to 2 mass%, and particularly preferably from 0.1 mass% to 1 mass%.

From the viewpoint of more effectively improving battery characteristics after storage, among the compounds represented by formula (2) to (9) above,
it is more preferable that the non-aqueous electrolyte solution of the disclosure contains the compound represented by Formula (3), and
it is still more preferable that the solution contains the compound represented by Formula (3) and the compound represented by Formula (5).

When the non-aqueous electrolyte solution of the disclosure contains the compound represented by Formula (3) and the compound represented by Formula (5), it is preferable that the mass content of the compound represented by Formula (5) is greater than the mass content of the compound represented by Formula (1) and greater than the mass of the compound represented by Formula (3).

When the non-aqueous electrolyte solution of the disclosure contains the compound represented by Formula (3) and the compound represented by Formula (5), the ratio of the mass content of the compound represented by Formula (5) to the mass content of the compound represented by Formula (3) (hereinafter, also referred to as "mass content ratio [compound represented by Formula (5) / compound represented by Formula (3)]") is preferably from 0.2 to 10, more preferably from 0.5 to 8, still more preferably from 1.1 to 8, still more preferably from 1.5 to 6, and still more preferably from 2 to 6.

When the non-aqueous electrolyte solution of the disclosure contains the compound represented by Formula (3) and the compound represented by Formula (5), the ratio of the mass content of the compound represented by Formula (5) to the mass content of the compound represented by Formula (1) (hereinafter, also referred to as "mass content ratio [compound represented by Formula (5) / compound represented by Formula (1)]") is preferably from 0.2 to 10, more preferably from 0.5 to 8, still more preferably from 1.1 to 8, still more preferably from 1.5 to 6, and still more preferably from 2 to 6.

When the non-aqueous electrolyte solution of the disclosure contains the compound represented by Formula (3) and the compound represented by Formula (5), the ratio of the mass content of the compound represented by Formula (3) to the mass content of the compound represented by Formula (1) (hereinafter, also referred to as "mass content ratio [compound represented by Formula (3) / compound represented by Formula (1)]") is preferably from 0.1 to 10, more preferably from 0.2 to 5, and still more preferably from 0.3 to 3.

Next, the other components of the non-aqueous electrolyte solution will be described. A non-aqueous electrolyte solution generally contains an electrolyte and a non-aqueous solvent.

### < Electrolyte >

The non-aqueous electrolyte solution of the disclosure contains an electrolyte.

The electrolyte preferably contains a lithium salt, and more preferably contains LiPF₆.

When the electrolyte contains LiPF₆, the ratio of LiPF₆ in the electrolyte is preferably from 10 mass% to 100 mass%, more preferably from 50 mass% to 100 mass%, and still more preferably from 70 mass% to 100 mass%.

The concentration of electrolyte in the non-aqueous electrolyte solution of the disclosure is preferably from 0.1 mol/L to 3 mol/L, and more preferably from 0.5 mol/L to 2 mol/L.

The concentration of LiPF₆ in the non-aqueous electrolyte solution of the disclosure is preferably from 0.1 mol/L to 3 mol/L, and more preferably from 0.5 mol/L to 2 mol/L.

When the electrolyte contains LiPF₆, the electrolyte may also contain a compound other than LiPF₆.

Examples of the compound other than LiPF₆ include:
a tetraalkylammonium salt such as (C₂H₅)₄NPF₆, (C₂H₅)₄NBF₄, (C₂H₅)₄NClO₄,
(C₂H₅)₄NAsF₆, (C₂H₅)₄N₂SiF₆, (C₂H₅)₄NOSO₂CkF₍₂ₖ₊₁₎ (k = an integer from 1 to 8),
(C₂H₅)₄NPFₙ[CkF₍₂ₖ₊₁₎]₍₆₋ₙ₎ (n = an integer from 1 to 5, k = an integer from 1 to 8); and
a lithium salt (i.e. a lithium salt other than LiPF₆) such as LiBF₄, LiClO₄, LiAsF₆, Li₂SiF₆,
LiOSO₂CkF₍₂ₖ₊₁₎ (k = an integer from 1 to 8), LiPFₙ[CₖF₍₂ₖ₊₁₎]₍₆₋ₙ₎ (n = an integer from 1 to 5,
k = an integer from 1 to 8), LiC(SO₂R⁷)(SO₂R⁸)(SO₂R⁹), LiN(SO₂OR¹⁰)(SO₂OR¹¹), or
LiN(SO₂R¹²)(SO₂R¹³) (where R⁷ to R¹³ may be the same or different from each other and are a fluorine atom or a perfluoroalkyl group having from 1 to 8 carbon atoms).

### < Non-aqueous Solvent >

The non-aqueous electrolyte solution of the disclosure contains a non-aqueous solvent.

Only one type of non-aqueous solvent or two or more types of non-aqueous solvents may be contained in the non-aqueous electrolyte solution.

A variety of known non-aqueous solvents can be selected as appropriate.

As the non-aqueous solvent, for example, a non-aqueous solvent described in paragraphs 0069 to 0087 of JP-A 2017-45723 can be used.

The non-aqueous solvent preferably contains a cyclic carbonate compound and a chain carbonate compound.

In this case, only one or two or more cyclic carbonate compounds and chain carbonate compounds, respectively, may be contained in the non-aqueous solvent.

Examples of cyclic carbonate compounds include ethylene carbonate, propylene carbonate, 1,2-butylene carbonate, 2,3-butylene carbonate, 1,2-pentylene carbonate, and 2,3-pentylene carbonate.

Among them, ethylene carbonate and propylene carbonate with high dielectric constant are suitable. In the case of a battery using a negative electrode active material containing graphite, the non-aqueous solvent more preferably contains ethylene carbonate.

Examples of chain carbonate compounds include dimethyl carbonate, methyl ethyl carbonate, diethyl carbonate, methyl propyl carbonate, methyl isopropyl carbonate, ethyl propyl carbonate, dipropyl carbonate, methyl butyl carbonate, ethyl butyl carbonate, dibutyl carbonate, methylpentyl carbonate, ethylpentyl carbonate, dipentyl carbonate, methylheptyl carbonate, ethylheptyl carbonate, diheptyl carbonate, methylhexyl carbonate, ethylhexyl carbonate, dihexyl carbonate, methyloctyl carbonate, ethyloctyl carbonate, and dioctyl carbonate.

Specific examples of the combination of a cyclic carbonate and a chain carbonate include ethylene carbonate with dimethyl carbonate; ethylene carbonate with methyl ethyl carbonate; ethylene carbonate with diethyl carbonate; propylene carbonate with dimethyl carbonate; propylene carbonate with methyl ethyl carbonate; propylene carbonate with diethyl carbonate; ethylene carbonate with propylene carbonate and methyl ethyl carbonate; ethylene carbonate with propylene carbonate and diethyl carbonate; ethylene carbonate with dimethyl carbonate and methyl ethyl carbonate; ethylene carbonate with dimethyl carbonate and diethyl carbonate; ethylene carbonate with methyl ethyl carbonate, and diethyl carbonate; ethylene carbonate with dimethyl carbonate, methyl ethyl carbonate, and diethyl carbonate; ethylene carbonate with propylene carbonate, dimethyl carbonate, and methyl ethyl carbonate; ethylene carbonate with propylene carbonate, dimethyl carbonate, and diethyl carbonate; ethylene carbonate with propylene carbonate, methyl ethyl carbonate, and diethyl carbonate; and ethylene carbonate with propylene carbonate, dimethyl carbonate, methyl ethyl carbonate, and diethyl carbonate.

The mixing proportion of a cyclic carbonate compound and a chain carbonate compound is, when expressed as a mass ratio, the ratio of cyclic carbonate: chain carbonate is, for example, from 5:95 to 80:20, and preferably from 10:90 to 70:30, and more preferably from 15:85 to 55:45. When such ratios are employed, an increase in the viscosity of the non-aqueous electrolyte solution is suppressed, and the degree of dissociation of the electrolyte can be increased. Therefore, the conductivity of the non-aqueous electrolyte solution related to the charge-discharge characteristics of a battery can be increased. Furthermore, the solubility of the electrolyte can be further increased. Accordingly, since a non-aqueous electrolyte solution having excellent electrical conductivity at normal temperature or at a low temperature can be obtained, the load characteristics of a battery at normal temperature to a low temperature can be improved.

The non-aqueous solvent may contain another compound other than cyclic carbonate compounds and chain carbonate compounds.

In this case, the other compounds contained in the non-aqueous solvent may be only one type or two or more types.

Examples of the other compounds include a cyclic carboxylic ester compound (such as γ-butyrolactone), a cyclic sulfone compound, a cyclic ether compound, a chain carboxylic ester compound, a chain ether compound, a chain phosphate compound, an amide compound, a chain carbamate compound, a cyclic amide compound, a cyclic urea compound, a boron compound, and a polyethylene glycol derivative.

For these compounds, the description in paragraphs 0069 to 0087 of JP-A No. 2017-45723 can be referred to as appropriate.

The ratio of the cyclic carbonate compound and the chain carbonate compound in the non-aqueous solvent is preferably 80 mass% or more, more preferably 90 mass% or more, and still more preferably 95 mass% or more.

The ratio of the cyclic carbonate compound and the chain carbonate compound in the non-aqueous solvent may be 100 mass%.

The proportion of the non-aqueous solvent in the non-aqueous electrolyte solution is preferably 60 mass% or more, and more preferably 70 mass% or more.

The upper limit of the ratio of the non-aqueous solvent in the non-aqueous electrolyte solution depends on the content of other components (electrolytes, additives, and the like), and the upper limit is, for example, 99 mass%, and preferably 97 mass%, and still more preferably 90 mass%.

### [Lithium Secondary Battery]

The lithium secondary battery of the disclosure includes:
a positive electrode containing lithium iron phosphate as a positive electrode active material;
a negative electrode; and
the non-aqueous electrolyte solution of the disclosure described above.

The lithium secondary battery of the disclosure is a lithium secondary battery containing lithium iron phosphate as a positive electrode active material, yet the degradation of the battery characteristics after storage is reduced.

Such an effect is brought about by the compound represented by Formula (1) in the non-aqueous electrolyte solution.

### < Positive Electrode >

The positive electrode contains lithium iron phosphate (LiFePO₄) as a positive electrode active material.

The positive electrode may also contain a component other than lithium iron phosphate as a positive electrode active material.

Examples of the component other than lithium iron phosphate include:
a transition metal oxide or a transition metal sulfide such as MoS₂, TiS₂, MnO₂, or V₂O₅;
a composite oxide composed of lithium and a transition metal, such as LiCoO2, LiMnO₂,
LiMn₂O₄, LiNiO₂, LiNi_{X}Co_{(1-X)}O₂ [0 < X <1], LiNiₓMn_{y}Co_{z}O₂ [x, y, and z are independently greater than 0 and less than 1.00, and the sum of x, y, and z is from 0.99 to 1.00], or LiMnPO₄; and
a conductive polymer material such as polyaniline, polythiophene, polypyrrole, polyacetylene, polyacene, dimercaptothiadiazole, or polyaniline composite.

The proportion of lithium iron phosphate in a positive electrode active material is preferably 70 mass% or more, more preferably 80 mass% or more, and still more preferably 90 mass% or more.

The proportion of lithium iron phosphate in a positive electrode active material may be 100 mass%, or may be less than 100 mass%.

The positive electrode preferably includes a positive electrode active material layer containing a positive electrode active material.

The positive electrode active material layer may contain a component other than the positive electrode active material.

Examples of the component other than the positive electrode active material include an electroconductive aid, and a binder.

Examples of the electroconductive aid include a carbon material such as carbon black (for example, acetylene black), amorphous whiskers, and graphite.

Examples of the binder include polyvinylidene fluoride.

The positive electrode active material layer can be formed by applying a positive electrode mixture slurry containing a positive electrode active material and a solvent onto the positive electrode current collector, which is described below, and drying the slurry.

The positive electrode mixture slurry may contain a component (such as an electroconductive aid or a binder) other than the positive electrode active material.

Examples of the solvent in the positive electrode mixture slurry include an organic solvent such as *N*-methylpyrrolidone.

The proportion of the positive electrode active material to the total solid content of the positive electrode active material layer is preferably 70 mass% or more, more preferably 80 mass% or more, and still more preferably 90 mass% or more.

The proportion of the positive electrode active material to the total solid content of the positive electrode active material layer may be 100 mass%.

Here, the total solid content of the positive electrode active material layer means the total amount of the positive electrode active material layer excluding the solvent when the solvent remains in the positive electrode active material layer, or the total amount of the positive electrode active material layer when no solvent remains in the positive electrode active material layer.

The proportion of lithium iron phosphate in the total solid content of the positive electrode active material layer is preferably 70 mass% or more, more preferably 80 mass% or more, and still more preferably 90 mass% or more.

The proportion of lithium iron phosphate in the total solid content of the positive electrode active material layer may be 100 mass% or may be less than 100 mass%.

The positive electrode preferably includes a positive electrode current collector.

The material of the positive electrode current collector is not particularly limited, and any known material can be used.

Specific examples of the positive electrode current collector include a metallic material such as aluminum, aluminum alloy, stainless steel, nickel, titanium, or tantalum; and a carbon material such as carbon cloth or carbon paper.

### < Negative Electrode >

The negative electrode preferably contains a negative electrode active material.

As the negative electrode active material, at least one selected from the group consisting of metal lithium, lithium-containing alloys, metals or alloys capable of alloying with lithium, oxides capable of doping and dedoping lithium ions, transition metal nitrides capable of doping and dedoping lithium ions, and carbon materials capable of doping and dedoping lithium ions can be used.

Examples of the metals or alloys capable of alloying with lithium (or lithium ions) include silicon, silicon alloys, tin, and tin alloys.

Examples of the negative electrode active material also include lithium titanate.

Among these compounds, a carbon material capable of doping and dedoping lithium ions is preferable.

Examples of such a carbon material include carbon black, activated carbon, a graphite material (artificial graphite or natural graphite), and an amorphous carbon material. The form of the carbon material may be any of a fibrous form, a spherical form, a potato form, and a flake form.

Specific examples of the amorphous carbon material include hard carbon, cokes, mesocarbon microbeads (MCMB) calcined at or below 1500°C, and mesophase pitch-based carbon fibers (MCF).

Examples of the graphite material include natural graphite and artificial graphite. Examples of the artificial graphite to be used include graphitized MCMB and graphitized MCF. Furthermore, examples of the graphite material that can be used include boron-containing graphites. Additional examples of the graphite material that can be used include a graphite material coated with a metal such as gold, platinum, silver, copper or tin, a graphite material coated with an amorphous carbon, and a mixture of amorphous carbon and graphite.

These carbon materials may be used singly or in mixture of two or more kinds thereof. The carbon material is particularly preferably a carbon material whose interplanar spacing d(002) of the (002) plane measured by an X-ray analysis is 0.340 nm or less. Furthermore, the carbon material is also preferably a graphite having a true density of 1.70 g/cm³ or greater or a highly crystalline carbon material having properties close thereto. The use of any of the carbon materials as described above can further increase the energy density of the battery.

The proportion of a carbon material (preferably a graphite material) in a negative electrode active material is preferably 70 mass% or more, more preferably 80 mass% or more, and still more preferably 90 mass% or more.

The proportion of a carbon material (preferably a graphite material) in a negative electrode active material may be 100 mass%, or may be less than 100 mass%.

The negative electrode preferably includes a negative electrode active material layer containing a negative electrode active material.

The negative electrode active material layer may contain a component other than the negative electrode active material.

Examples of the component other than the negative electrode active material include a binder.

Examples of the binder include carboxymethyl cellulose and SBR latex.

The negative electrode active material layer can be formed by applying a negative electrode mixture slurry containing a negative electrode active material and a solvent onto the negative electrode current collector, which is described below, and drying the slurry.

The negative electrode mixture slurry may contain a component (such as a binder) other than the negative electrode active material.

Examples of the solvent in the negative electrode mixture slurry include water.

The proportion of the negative electrode active material to the total solid content of the negative electrode active material layer is preferably 70 mass% or more, more preferably 80 mass% or more, and still more preferably 90 mass% or more.

The proportion of the negative electrode active material to the total solid content of the negative electrode active material layer may be 100 mass%.

Here, the total solid content of the negative electrode active material layer means the total amount of the negative electrode active material layer excluding the solvent when the solvent remains in the negative electrode active material layer, or the total amount of the negative electrode active material layer when no solvent remains in the negative electrode active material layer.

The proportion of a carbon material (preferably a graphite material) in the total solid content of the negative electrode active material layer is preferably 70 mass% or more, more preferably 80 mass% or more, and still more preferably 90 mass% or more.

The proportion of a carbon material (preferably a graphite material) in the total solid content of the negative electrode active material layer may be 100 mass%.

The negative electrode preferably includes a negative electrode current collector.

The material of the negative electrode current collector is not particularly limited, and any known material can be used.

Specific examples of the negative electrode current collector include a metallic material such as copper, nickel, stainless steel, or nickel-plated steel. Among them, copper is particularly preferable from the viewpoint of ease of processing.

### < Separator >

The lithium secondary battery of the disclosure preferably includes a separator between the negative electrode and the positive electrode.

The separator is a film which electrically insulates the positive electrode and the negative electrode, and transmits lithium ions, and examples thereof include a porous film and a polyelectrolyte.

A finely porous polymer film is suitably used as the porous film, and examples of materials of the porous film include polyolefins, polyimides, polyvinylidene fluoride, and polyesters.

Particularly, porous polyolefins are preferable, and specific examples thereof include a porous polyethylene film, a porous polypropylene film, and a multilayer film composed of a porous polyethylene film and a porous polypropylene film. The porous polyolefin film may be coated with another resin excellent in thermal stability.

Examples of the polyelectrolyte include a polymer containing a dissolved lithium salt and a polymer swollen with an electrolyte solution.

The non-aqueous electrolyte solution of the disclosure may also be used to swell a polymer to obtain a polyelectrolyte.

### < Configuration of Battery >

The lithium secondary battery of the invention can be formed in any of various known shapes and can be formed into a cylindrical shape, a coin shape, a rectangular shape, a laminated shape, a film shape, and any other optional shape. However, the basic structure of the battery is the same irrespective of the shape thereof, and design modifications can be made according to purpose.

Examples of the lithium secondary battery of the disclosure include a laminated battery.

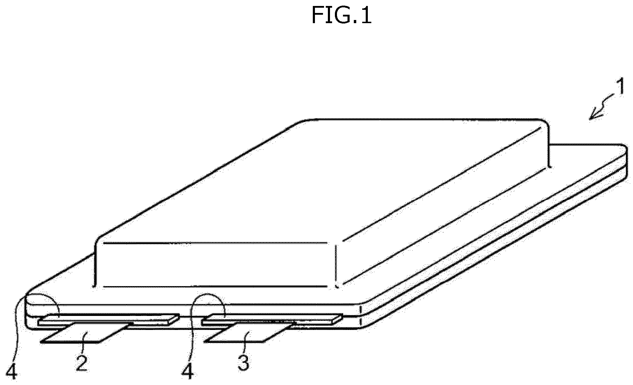

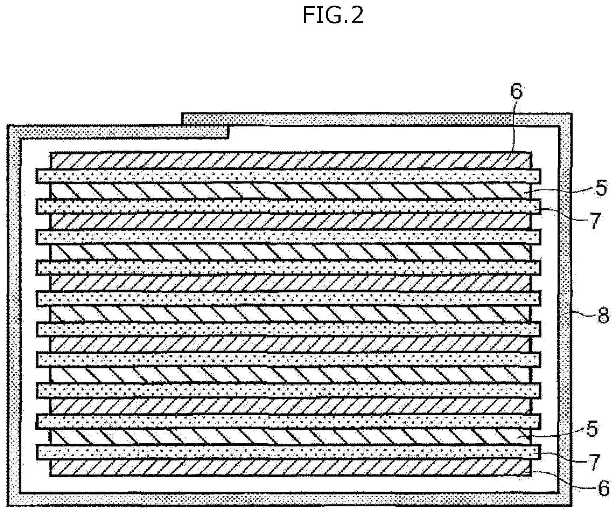

Fig. 1 is a schematic perspective diagram illustrating one example of a laminated battery, which is one example of the lithium secondary battery of the disclosure, and Fig. 2 is a schematic sectional diagram in the thickness direction of a layered electrode body housed in the laminated battery illustrated in Fig. 1.

The laminated battery illustrated in Fig. 1 contains a non-aqueous electrolyte solution (not illustrated in Fig. 1) and a layered electrode body (not illustrated in Fig. 1) inside, and includes a laminated packaging 1 whose periphery is sealed to seal the inside. For example, as the laminated packaging 1, an aluminum laminated packaging is used.

A layered electrode body housed in the laminated packaging 1 includes a layered body composed of positive electrode plates 5 and negative electrode plates 6 alternately laminated via separators 7, and a separator 8 surrounding the layered body, as shown in Fig. 2. The positive electrode plate 5, the negative electrode plate 6, the separator 7, and the separator 8 are impregnated with the non-aqueous electrolyte solution of the disclosure. The positive electrode plate 5 includes a positive electrode current collector and a positive electrode active material layer. The negative electrode plate 5 includes a negative electrode current collector and a negative electrode active material layer.

The plurality of positive electrode plates 5 in the above-described layered electrode body are all electrically connected to a positive electrode terminal 2 via a positive electrode tab (not illustrated), and a part of this positive electrode terminal 2 protrudes outward from the peripheral end of the above-described laminated packaging 1 (Fig. 1). A portion of the positive electrode terminal 2 protruding from the peripheral end of the laminated packaging 1 is sealed by an insulating seal 4.

Similarly, the plurality of negative electrode plates 6 in the above-described layered electrode body are all electrically connected to a negative electrode terminal 3 via a negative electrode tab (not illustrated), and a part of this negative electrode terminal 3 protrudes outward from the peripheral end of the above-described laminated packaging 1 (Fig. 1). A portion of the negative electrode terminal 3 protruding from the peripheral end of the laminated packaging 1 is sealed by an insulating seal 4.

In the laminated battery of the above-described example, the number of positive electrode plates is five and the number of negative electrode plates is six, and the positive electrode plates 5 and the negative electrode plates 6 are layered via the separators 7 in an arrangement in which the outermost layers on both sides are both negative electrode plates 6. However, the number of positive electrode plates, the number of negative electrode plates, and the arrangement of these plates in the laminated battery are not limited to this example, and a variety of changes may be made.

Another example of the lithium secondary battery of the disclosure is a coin battery.

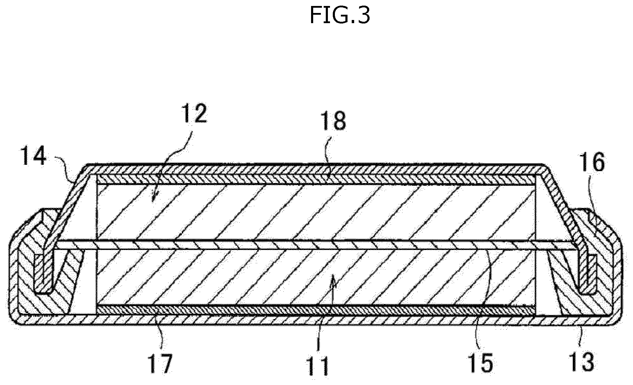

Fig. 3 is a schematic perspective diagram illustrating one example of a coin battery, which is another example of the lithium secondary battery of the disclosure.

In the coin battery illustrated in FIG. 3, a disc-shaped negative electrode 12, a separator 15 in which the non-aqueous electrolyte solution is injected, a disc-shaped positive electrode 11, and as needed, spacer plates 17 and 18 made of stainless steel, aluminum or the like are laminated in this order, and, in the laminated state, are accommodated between a positive electrode can 13 (hereinafter also referred to as a "battery can") and a sealing plate 14 (hereinafter also referred to as a "battery can lid"). The positive electrode can 13 and the sealing plate 14 are sealed by caulking with a gasket 16.

In this example, the non-aqueous electrolyte solution of the disclosure is used as the non-aqueous electrolyte solution to be injected into the separator 15. The disk-shaped positive electrode 11 includes a positive electrode current collector and a positive electrode active material layer. The disk-shaped negative electrode 12 includes a negative electrode current collector and a negative electrode active material layer.

The lithium secondary battery of the disclosure may be a lithium secondary battery obtained by charging and discharging a lithium secondary battery (a lithium secondary battery before charge and discharge) that includes a negative electrode, a positive electrode, and the non-aqueous electrolyte solution of the disclosure.

Specifically, the lithium secondary battery of the disclosure may be a lithium secondary battery (a lithium secondary battery that has been charged and discharged) obtained by first producing a lithium secondary battery before charge and discharge that includes a positive electrode, a negative electrode, and the non-aqueous electrolyte solution of the disclosure and subsequently charging and discharging the lithium secondary battery before charge and discharge one or more times.

There are no particular limitations on the use of the lithium secondary battery of the disclosure, and it can be used in various known applications. For example, the lithium secondary battery can be widely utilized in small-sized portable devices as well as in large-sized devices, such as notebook computers, mobile computers, mobile telephones, headphone stereos, video movie cameras, liquid crystal television sets, handy cleaners, electronic organizers, calculators, radios, back-up power supply applications, motors, automobiles, electric cars, motorcycles, electric motorcycles, bicycles, electric bicycles, illuminating devices, game players, time pieces, electric tools, and cameras.

### EXAMPLES

Examples of the disclosure are described below. However, the disclosure is not limited by the following Examples.

In the following Examples, "addition amount" represents a content in the total amount of the final non-aqueous electrolyte solution.

In addition, "wt%" means mass%.

### [Example 1]

A coin lithium secondary battery (hereinafter also referred to as "coin battery") having the configuration illustrated in Fig. 3 was produced by the following procedure.

### < Production of Positive Electrode >

Lithium iron phosphate (LiFePO₄; hereinafter, also referred to as "LFP") (90 parts by mass) as a positive electrode active material, acetylene black (5 parts by mass) as an electroconductive aid, and polyvinylidene fluoride (5 parts by mass) as a binder were kneaded in N-methylpyrrolidinone as a solvent, and thus a positive electrode mixture slurry in a paste form was prepared.

Next, this positive electrode mixture slurry was applied on a strip-shaped positive electrode current collector made of an aluminum foil having a thickness of 20 µm, and the slurry was dried. Subsequently, the assembly was compressed with a roll press, and thus a sheet-like positive electrode composed of a positive electrode current collector and a positive electrode active material layer was obtained. The coating density of the positive electrode active material layer was 22 mg/cm², and the packing density was 2.5 g/mL.

### <Production of Negative Electrode>

Amorphous-coated natural graphite (97 parts by mass) as a negative electrode active material, carboxymethyl cellulose (1 part by mass) as a binder, and SBR latex (2 parts by mass) as a binder were kneaded in an aqueous solvent, and thus a negative electrode mixture slurry in a paste form was prepared.

Next, this negative electrode mixture slurry was applied on a strip-shaped negative electrode current collector made of a copper foil having a thickness of 10 µm, and the slurry was dried. Subsequently, the assembly was compressed with a roll press, and thus a sheet-like negative electrode composed of a negative electrode current collector and a negative electrode active material layer was obtained. The coating density of the negative electrode active material layer was 12 mg/cm², and the packing density was 1.5 g/mL.

### < Preparation of Non-aqueous Electrolyte Solution >

Ethylene carbonate (EC), dimethyl carbonate (DMC), and methyl ethyl carbonate (EMC) were mixed together in a proportion of 30:35:35 (mass ratio) to obtain a mixed solvent as a non-aqueous solvent.

LiPF₆ as an electrolyte was dissolved in the resulting mixed solvent such that the electrolyte concentration in an eventually obtained non-aqueous electrolyte solution was 1 mol/liter.

To the obtained solution, additives were added as follows to obtain a non-aqueous electrolyte solution.

DCC (*N,N'*-dicyclohexylcarbodiimide; a compound in which R¹¹ and R¹² are both cyclohexyl groups), which is a specific example of a compound represented by Formula (1) (hereinafter, also referred to as "Formula (1) compound"), was added in such a manner that the content to the total mass of a non-aqueous electrolyte solution to be eventually prepared was 0.5 mass% (or added at an additive amount of 0.5 mass%).

Furthermore, Compound (5-1) (vinylene carbonate), which is a specific example of a compound represented by Formula (5) (hereinafter, also referred to as "Formula (5) compound"), was added in such a manner that the content to the total mass of a non-aqueous electrolyte solution to be eventually prepared was 2 mass% (or added at an additive amount of 2 mass%).

### <Production of Coin Battery >

The negative electrode described above was punched into a disc form having a diameter of 14 mm, while the positive electrode described above was punched into a disc form having a diameter of 13 mm, and thus a coin-shaped negative electrode and a coin-shaped positive electrode were obtained. Furthermore, a microporous polyethylene film having a thickness of 20 µm was punched into a disc form having a diameter of 17 mm, and thus a separator was obtained.

The coin-shaped negative electrode, the separator and the coin-shaped positive electrode thus obtained were laminated in this order inside a battery can (size 2032) made of stainless steel, and 20 µL of the non-aqueous electrolyte solution was injected into this battery can to impregnate the separator, the positive electrode, and the negative electrode.

Subsequently, an aluminum plate (thickness: 1.2 mm, diameter: 16 mm) and a spring were mounted on the positive electrode and the battery was then sealed by caulking the battery can lid via a gasket made of polypropylene.

Thus, a coin battery (or a coin-type lithium secondary battery) having a diameter of 20 mm and a height of 3.2 mm and having the configuration illustrated in FIG. 3 was obtained.

### <Evaluation>

The coin battery thus obtained was subjected to the following evaluation.

The evaluation results are shown in Table 1.

In Table 1, the discharge capacity and battery resistance in Examples 1 and 2 are shown as relative values when the value in Comparative Example 1, described below, is 100.

The higher the discharge capacity, the better the battery characteristics, and the lower the battery resistance, the better the battery characteristics.

In the following, "conditioning" refers to a process of repeatedly charging and discharging the coin battery between 2.75 V and 4.2 V three times in a thermostatic chamber at 25°C.

Hereinafter, "high temperature storage" refers to an operation of storing the coin battery in a thermostatic chamber at 75°C for seven days.

The battery resistance was measured at each of the two temperature conditions of 25°C and -20°C.

### (Battery Resistance Before High Temperature Storage)

The above-described coin battery was subjected to conditioning.

The SOC (State of Charge) of the coin battery after conditioning was adjusted to 80%, and then the battery resistance (direct current resistance) before high temperature storage of the coin battery was measured by the following method.

A coin battery adjusted to 80% SOC as described above was used to perform a CC10s discharge at a discharging rate of 0.2C.

Here, CC10s discharge means discharging at constant current for 10 seconds.

The direct current resistance was calculated based on current value (specifically, the current value corresponding to a discharging rate of 0.2 C) and the reduction in voltage (= voltage before the start of discharge - voltage at the 10th second after the start of discharge) in the above-described "CC10s discharge at a discharging rate of 0.2 C" . The obtained direct-current resistance (Ω) was defined as the battery resistance (Ω) before high-temperature storage of the coin battery.

### (Battery Resistance After High Temperature Storage)

The coin battery whose battery resistance before high-temperature storage had been measured was subjected to CC-CV charging to 3.5V at a charging rate of 0.2C at 25°C, and then was subjected to high temperature storage (specifically, stored at 75°C for 7 days).

Here, CC-CV charging means Constant Current - Constant Voltage.

The SOC of the coin battery after high temperature storage was adjusted to 80%, and then the battery resistance (Ω) after high temperature storage of the coin battery was measured in the same way as the measurement of battery resistance before high temperature storage.

### (Discharge Capacity Before High Temperature Storage (0.2C))

The above-described coin battery was subjected to conditioning.

After conditioning, the coin battery was subjected to CC-CV charging to 3.5V at a charging rate of 0.2C at 25°C in a thermostatic chamber, and then the discharge capacity (0.2C) (mAh) before high temperature storage was measured at a discharging rate of 0.2C at 25°C.

### (Recovery Discharge Capacity After High Temperature Storage (0.2 C))

The coin battery whose discharge capacity before high temperature storage (0.2 C) had been measured was subjected to CC-CV charging to 3.5V at a charging rate of 0.2C at 25°C, and then was subjected to high temperature storage.

The coin battery after high temperature storage was subjected to CC-discharging at a discharging rate of 0.2 C at 25°C until the SOC became 0%, and then was subjected to CC-CV-charging at a charging rate of 0.2 C to 3.5 V The coin battery was then subjected to CC-discharging at a discharging rate of 0.2 C and the recovered discharge capacity after high temperature storage (0.2 C) (mAh) was measured.

### (Discharge Capacity Before High Temperature Storage (1 C))

Discharge capacity before high temperature storage (1 C) (mAh) was measured in the same way as discharge capacity before high temperature storage (0.2 C), except that the discharging rate was changed to 1 C.

### (Recovery Discharge Capacity After High Temperature Storage (1 C))

The coin battery whose discharge capacity before high temperature storage (1 C) had been measured was subjected to CC-CV charging to 3.5V at a charging rate of 0.2C at 25°C, and then was subjected to high temperature storage.

The coin battery after high temperature storage was subjected to CC-discharging at a discharging rate of 0.2 C at 25°C until the SOC became 0%, and then was subjected to CC-CV-charging at a charging rate of 0.2 C to 3.5 V The coin battery was then subjected to CC-discharging at a discharging rate of 1C and the recovered discharge capacity after high temperature storage (1 C) (mAh) was measured.

### (Negative Electrode Fe Analysis After High Temperature Storage (Fe Precipitation; Mass ppm))

The above-described coin battery was subjected to conditioning.

The coin battery after conditioning was subjected to CC-CV-charging to 3.5 V at a charging rate of 0.2 C at 25°C, and then was subjected to high temperature storage.

The coin battery after high temperature storage was disassembled and the coin-shaped negative electrode was taken out.

The surface of the negative electrode was scraped off to form a powder, and then quantitative analysis of Fe was performed by ICP mass spectrometry (Perkin Elmer ICP-MS).

Based on the results obtained, the precipitation concentration of Fe (mass ppm) with respect to the entire negative electrode active material layer was determined.

### [Example 2]

The same operation was performed as in Example 1, except that the DCC used to prepare the non-aqueous electrolyte solution was replaced with DIC (*N,N'-*diisopropylcarbodiimide; a compound in which R¹¹ and R¹² are both isopropyl groups) of the same mass.

The results are shown in Table 1.

### [Comparative Example 1]

The same operation was performed as in Example 1 except that DCC was not included in the non-aqueous electrolyte solution.

The results are shown in Table 1.

### [Comparative Examples 2 to 4]

The same operations as in Comparative Example 1, Example 1, and Example 2 were performed except for the following changes.

LPF as a positive electrode active material was changed to LiCoO₂ (hereinafter, also referred to as "LCO") of the same mass.

The charging voltage in the battery evaluation was changed from 3.5 V to 4.2 V.

Quantitative analysis of Co was performed on the negative electrode after high temperature storage, in place of the quantitative analysis of Fe.

The results are shown in Table 1.

In Table 1, the discharge capacity and battery resistance in Comparative Examples 3 and 4 are shown as relative values when the value in Comparative Example 2 is 100, respectively.

**[Table 1]**

| | Positive electrode active material | Additive in non-aqueous electrolyte solution | | | | Negative electrode metal analysis after storage (Precipitation amount; massppm) | Discharge capacity (relative value) | | | | Battery resistance (relative value) | | | |
|---|---|---|---|---|---|---|---|---|---|---|---|---|---|---|
| | | Formula (1) compound | | Formula (5) compound | | | 0.2 C | | 1C | | 25°C | | -20°C | |
| | | Type | Addition amount (wt%) | Type | Addition amount (wt%) | | Before storage | Recovery after storage | Before storage | Recovery after storage | Before storage | After storage | Before storage | After storage |
| Comparative Example 1 | LFP | None | - | (5-1) | 2 | 940 | 100 | 100 | 100 | 100 | 100 | 100 | 100 | 100 |
| Example 1 | LFP | DCC | 0.5 | (5-1) | 2 | 220 | 103 | 116 | 104 | 115 | 99 | 89 | 93 | 69 |
| Example 2 | LFP | DIC | 0.5 | (5-1) | 2 | 320 | 101 | 114 | 100 | 114 | 99 | 89 | 94 | 66 |
| Comparative Example 2 | LCO | None | - | (5-1) | 2 | 115 | 100 | 100 | 100 | 100 | 100 | 100 | 100 | 100 |
| Comparative Example 3 | LCO | DCC | 0.5 | (5-1) | 2 | 110 | 104 | 104 | 102 | 40 | 109 | 141 | 110 | 164 |
| Comparative Example 4 | LCO | DIC | 0.5 | (5-1) | 2 | 120 | 103 | 100 | 101 | 43 | 114 | 171 | 120 | 215 |

- Explanation of Table 1 -.

For Comparative Example 1, Example 1, and Example 2, in which LFP was used as the positive electrode active material, the amount of Fe precipitation (mass ppm) is shown as the numerical value in the "Negative electrode metal analysis after storage" column.

For Comparative Examples 2 to 4 in which LCO was used as the positive electrode active material, the amount of Co precipitation (mass ppm) is shown as the numerical value in the "Negative electrode metal analysis after storage" column.

As shown in Table 1, in Examples 1 and 2, where lithium iron phosphate (LFP) was used as the positive electrode active material and Formula (1) compound was included in the non-aqueous electrolyte solution, the battery characteristics (specifically, discharge capacity and battery resistance) after storage were improved compared to Comparative Example 1, where Formula (1) compound was not included in the non-aqueous electrolyte solution. The reason for this is considered to be that leaching of Fe from the positive electrode active material in the coin battery after storage was suppressed in Examples 1 and 2 compared to Comparative Example 1.

From the overall results in Table 1, it can be seen that the effect of Formula (1) compound on improving the battery characteristics after storage is particularly pronounced when lithium iron phosphate (LFP) is used as the positive electrode active material.

[Example 101, Example 102, and Comparative Example 101]

The same operations as in Example 1 were performed, except that the types and amounts of additives to be included in the non-aqueous electrolyte solution were changed as shown in Table 2.

The results are shown in Table 2.

In Table 2, the discharge capacity and battery resistance in Example 101 and Example 102 are shown as relative values when the value in Comparative Example 101 is 100, respectively.

Additives in Table 2 are as follows.
DCC and DIC are specific examples of Formula (1) compounds, as described above.
Compound (3-3) is a specific example of a compound represented by Formula (3) (hereinafter, also referred to as "Formula (3) compound"), and
Compound (5-1) is a specific example of Formula (5) compound, as described above.

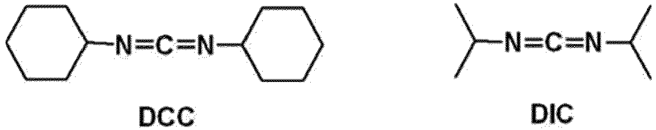

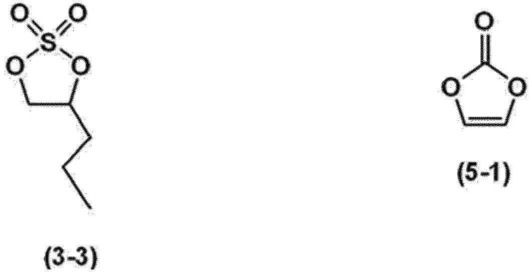

**[Table 2]**

| | Positive electrode active material | Additive in non-aqueous electrolyte solution | | | | | | Discharge capacity (Relative value) | | | | Battery resistance (relative value) | | | |
|---|---|---|---|---|---|---|---|---|---|---|---|---|---|---|---|
| | | Formula (1) compound | | Formula (3) compound | | Formula (5) compound | | 0.2 C | | 1C | | 25°C | | -20°C | |
| | | Type | Addition amount (wt%) | Type | Addition amount (wt %) | Type | Addition amount (wt %) | Before storage | Recovery after storage | Before storage | Recovery after storage | Before storage | After storage | Before storage | After storage |
| Comparative Example 101 | LFP | None | - | (3-3) | 0.5 | (5-1) | 2 | 100 | 100 | 100 | 100 | 100 | 100 | 100 | 100 |
| Example 101 | LFP | DCC | 0.5 | (3-3) | 0.5 | (5-1) | 2 | 98 | 123 | 99 | 125 | 104 | 93 | 90 | 81 |
| Example 102 | LFP | DIC | 0.5 | (3-3) | 0.5 | (5-1) | 2 | 98 | 117 | 99 | 119 | 100 | 85 | 91 | 77 |

As shown in Table 2, in Examples 101 and 102 in which lithium iron phosphate (LFP) was used as the positive electrode active material and the non-aqueous electrolyte solution contained Formula (1) compound, Formula (3) compound, and Formula (5) compound, the battery resistance was reduced compared to Comparative Example 101 in which the non-aqueous electrolyte solution did not contain Formula (1) compound.

From the comparison between Table 1 and Table 2, it can be seen that when a non-aqueous electrolyte solution contained Formula (3) compound (Table 2), the improvement in the recovery capacity after storage was greater than when the non-aqueous electrolyte solution did not contain Formula (3) compound (Table 1).

The entire disclosure of Japanese Patent Application No. 2018-233324 filed on December 13, 2018 is incorporated herein by reference.

All publications, patent applications, and technical standards mentioned in this specification are incorporated herein by reference to the same extent as if each individual publication, patent application, or technical standard was specifically and individually indicated to be incorporated by reference.

## Claims

1. A non-aqueous electrolyte solution for a battery, wherein:
the non-aqueous electrolyte solution is used for a lithium secondary battery comprising lithium iron phosphate as a positive electrode active material, and
the non-aqueous electrolyte solution comprises a compound represented by the following Formula (1):
R¹¹-N=C=N-R¹² (1)
wherein, in Formula (1), R¹¹ and R¹² each independently represent an aliphatic group having from 1 to 12 carbon atoms or a fluorinated aliphatic group having from 1 to 12 carbon atoms.

2. The non-aqueous electrolyte solution for a battery according to claim 1, wherein the compound represented by Formula (1) comprises a compound in which R¹¹ and R¹² in Formula (1) are each independently an aliphatic group having from 3 to 8 carbon atoms.

3. The non-aqueous electrolyte solution for a battery according to claim 1 or 2, further comprising at least one selected from the group consisting of compounds represented by any of the following Formulas (2) to (9): 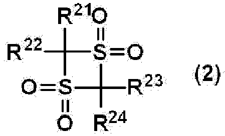 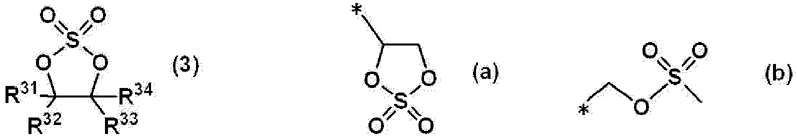 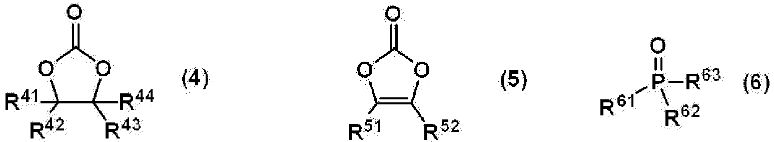 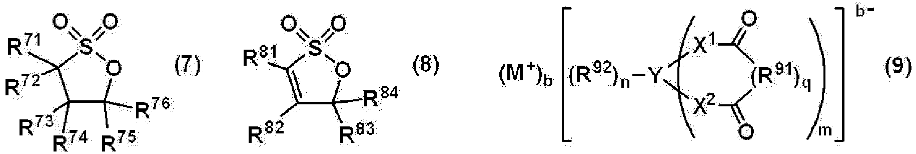
wherein, in Formula (2), R²¹ to R²⁴ each independently represent a hydrogen atom, a fluorine atom, a hydrocarbon group having from 1 to 6 carbon atoms, or a fluorinated hydrocarbon group having from 1 to 6 carbon atoms,
wherein, in Formula (3), R³¹ to R³⁴ each independently represent a hydrogen atom, a hydrocarbon group having from 1 to 6 carbon atoms, a group represented by Formula (a), or a group represented by Formula (b), and, in Formula (a) and Formula (b), * represents a bonding position,
wherein, in Formula (4), R⁴¹ to R⁴⁴ each independently represent a hydrogen atom, a fluorine atom, a hydrocarbon group having from 1 to 6 carbons, or a fluorinated hydrocarbon group having from 1 to 6 carbons, and R⁴¹ to R⁴⁴ are not simultaneously hydrogen atoms,
wherein, in Formula (5), R⁵¹ and R⁵² each independently represent a hydrogen atom, a fluorine atom, a hydrocarbon group having from 1 to 6 carbon atoms, or a fluorinated hydrocarbon group having from 1 to 6 carbon atoms,
wherein, in Formula (6), R⁶¹ to R⁶³ each independently represent a fluorine atom or an -OLi group, and at least one of R⁶¹ to R⁶³ is an -OLi group.
wherein, in Formula (7), R⁷¹ to R⁷⁶ each independently represent a hydrogen atom, a fluorine atom, a hydrocarbon group having from 1 to 3 carbon atoms, or a fluorinated hydrocarbon group having from 1 to 3 carbon atoms,
wherein, in Formula (8), R⁸¹ to R⁸⁴ independently represent a hydrogen atom, a fluorine atom, a hydrocarbon group having from 1 to 3 carbon atoms, or a fluorinated hydrocarbon group having from 1 to 3 carbon atoms, and
wherein, in Formula (9), M represents an alkali metal; Y represents a transition element or a group 13, 14, or 15 element of the periodic table; b is an integer from 1 to 3; m is an integer from 1 to 4; n is an integer from 0 to 8; q is 0 or 1; R⁹¹ represents an alkylene group having from 1 to 10 carbon atoms, a halogenated alkylene group having from 1 to 10 carbon atoms, an arylene group having from 6 to 20 carbon atoms, or a halogenated arylene group having from 6 to 20 carbon atoms, wherein these groups may contain a substituent or a heteroatom in a structure thereof, and, when q is 1, and m is from 2 to 4, the m R⁹¹s may be bonded; R⁹² represents a halogen atom, an alkyl group having from 1 to 10 carbon atoms, a halogenated alkyl group having from 1 to 10 carbon atoms, an aryl group having from 6 to 20 carbon atoms, a halogenated aryl group having from 6 to 20 carbon atoms, wherein these groups may contain a substituent or a heteroatom in a structure thereof, and, when n is from 2 to 8, the n R⁹²s may be optionally bonded to form a ring, or R⁹² represents -X³R⁹³; X¹, X², and X³ each independently represent O, S, or NR⁹⁴; and R⁹³ and R⁹⁴ each independently represent a hydrogen atom, an alkyl group having from 1 to 10 carbon atoms, a halogenated alkyl group having from 1 to 10 carbon atoms, an aryl group having from 6 to 20 carbon atoms, or a halogenated aryl group having from 6 to 20 carbon atoms, wherein these groups may contain a substituent or a heteroatom in a structure thereof, and, when there are a plurality of R⁹³s or R⁹⁴s, the plurality of R⁹³s or R⁹⁴s may be bonded to form a ring.

4. The non-aqueous electrolyte solution for a battery according to claim 3, comprising a compound represented by Formula (3).

5. The non-aqueous electrolyte solution for a battery according to claim 3 or 4, comprising a compound represented by Formula (3) and a compound represented by Formula (5).

6. The non-aqueous electrolyte solution for a battery according to claim 5, wherein a mass content of the compound represented by Formula (5) is greater than a mass content of the compound represented by Formula (1) and is greater than a mass content of the compound represented by Formula (3).

7. The non-aqueous electrolyte solution for a battery according to any one of claims 1 to 6, wherein a content of the compound represented by Formula (1) is from 0.01 mass% to 5 mass% with respect to a total amount of the non-aqueous electrolyte solution.

8. A lithium secondary battery comprising:
a positive electrode comprising lithium iron phosphate as a positive electrode active material;
a negative electrode; and
the non-aqueous electrolyte solution for a battery according to any one of claims 1 to 7.

9. A lithium secondary battery obtained by charging and discharging the lithium secondary battery according to claim 8.
